# EUROPEAN PATENT SPECIFICATION

(11) **EP 3 704 412 B1**
(45) Date of publication and mention of the grant of the patent: **12.06.2024**
(21) Application number: 18871867.0
(22) Date of filing: 22.10.2018
(51) Int. Cl.: F23B 60/00, F23B 50/02, F23N 3/00, F23N 1/02, F23K 3/16, F23K 3/22, G06F 3/16

(54) **DEVICE FOR DETECTION OF THE OPTIMUM RESIDUAL FUEL LAYER FOR SOLID-FUEL HEATERS**
VORRICHTUNG ZUR ERMITTLUNG DER OPTIMALEN RESTBRENNSTOFFSCHICHT FÜR FESTBRENNSTOFFHEIZUNGEN
DISPOSITIF DE DÉTECTION DE COUCHE DE COMBUSTIBLE RÉSIDUELLE OPTIMALE POUR APPAREILS DE CHAUFFAGE À COMBUSTIBLE SOLIDE

(30) Priority: 31.10.2017 CZ 20176866
(43) Date of publication of application: 09.09.2020
(73) Proprietor: Blaze Harmony s.r.o., 75131 Lipník nad Becvou (CZ); Halada, Michal, 37806 Suchdol nad Luznici (CZ)
(72) Inventor: HALADA, Michal, 37806 Suchdol nad Luznici (CZ)
(74) Representative: Malusek, Jiri
(86) International application number: PCT/CZ2018/000052
(87) International publication number: WO 2019/086057

(56) References cited:
- AT-B- 395 207
- CZ-U1- 24 378
- CZ-U1- 31 495
- DE-B- 1 037 052
- DE-C- 669 278
- JP-A- 2006 070 872
- KR-A- 20140 065 518
- US-A- 494 809
- US-A- 4 442 825

## Description

### Field of the invention

The invention relates to a solid fuel heater comprising a device for detection of the optimum residual fuel layer, in particular boilers with manual loading.

### Background of the invention

Many solid-fuel heaters, especially boilers, are equipped with a device enabling detection of burnout of the loaded fuel to the so-called residual layer. Residual layer refers to the glowing ember portions remaining from the fuel load. The term base layer is also used.

If fuel burnout down to the residual layer is detected, the combustion air supply is completely or largely stopped, and the heater enters the constant glowing state. Sufficiently large residual layer in this state will keep the fire for several hours. This allows subsequent restart operation without ignition by simply loading the fuel. Sufficiently large residual layer is desirable even if it later goes out completely, because it greatly facilitates firing up by serving as an ignition fuel.

Current known heaters are equipped with a device which typically performs detection of the residual layer on the basis of various variables: flue gas temperature, time lapse since the last loading of fuel, amount of oxygen in the flue gas or intensity of light radiation from the combustion chamber. The disadvantage of all these methods is relatively high inaccuracy and unreliability. In operation, the detected residual layer is either too small or too large.

Small residual layer is undesirable due to the loss of steady glowing, or in other words it shortens the glowing time of the fuel, thus increasing the demand for handling in reheat operation. Another disadvantage is that in operation with a small residual layer (at the end of the burning of the fuel load) there is a large excess of air in combustion, that is, most of the combustion air is not involved in combustion and sends heat to the chimney without the desired benefit. Large excesses of air furthermore cool the burning process, which results in greater production of pollutants, especially carbon monoxide.

Too large a residual layer is undesirable because it takes up space in the heater at the expense of the new fuel and contains volatile fuel components that are released in the form of hydrocarbons, acids, and water vapour during steady glowing shutdowns. Hydrocarbons pollute the atmosphere and cause clogging of the internal walls of the heater and chimney, while acids and humidity cause corrosion and thus shorten the life of the heater and chimney.

The less common method of detection of the residual layer is based on the mass of the fuel in the heater. This method surpasses the above methods in accuracy and reliability, however, it places relatively high demands on the design of the heater because it requires a moving bottom, which brings certain design constraints and raises the cost of the heater. Another drawback of this detection method is that its accuracy is adversely affected by ash which gradually accumulates at the bottom of the fuel chamber of the heater and distorts the information about the mass of residual fuel. Detection of the optimum size, or volume or mass of the residual layer is the key feature of a heater, thanks to which comfort, safety, heater and chimney lives, as well as overall economy and environmental friendliness are enhanced.

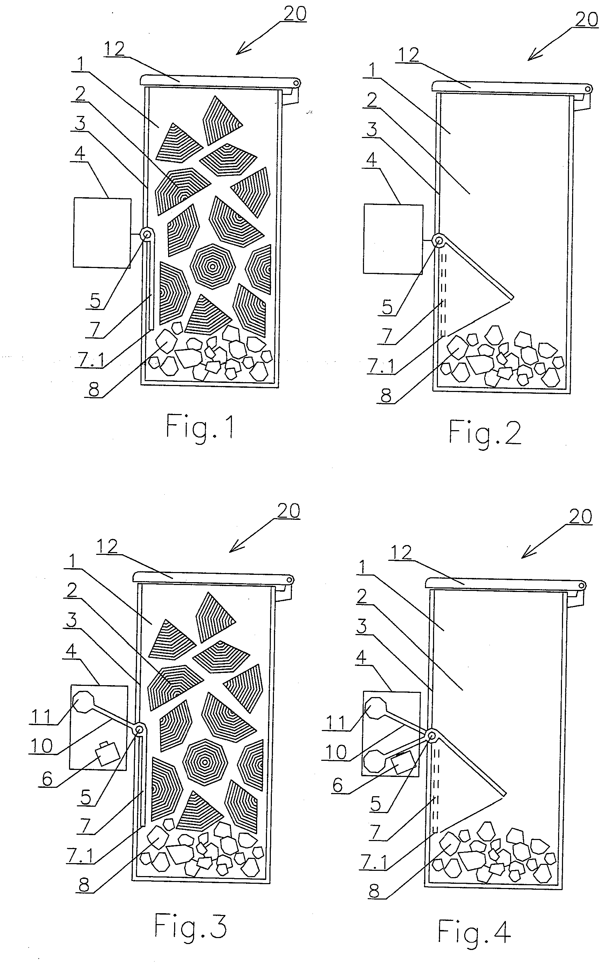

DE 669 278 C, on which the two-part-form of claim 1 is based, discloses a burner with a detection arm 2 which is pivotably connected to the housing of burner (figure 1).

DE 10 37 052 B relates to a solid fuel furnace with a fuel feed chute arranged vertically above the grate and a probe below the same which scans the top of the fuel pile cut on the grate.

AT 395 207 B discloses a device for the demand-dependent control of the supply of solid fuels - in particular wood chips - for an incineration plant.

US 494 809 A discloses a burner with a grate and an opening through which solid fuel is added.

### Object of the invention

The shortcomings of known devices for the detection of residual layer are largely eliminated by the device for detection of the optimum residual fuel layer of a solid fuel heater according to this invention. The essence of the invention is that it contains a rotating detection arm pivotally located in the fuel chamber of the heater, wherein the end portion of the detection arm defines the residual fuel level, and wherein the detection arm is connected to the detection deflection element. The detection deflection element includes an outer arm which is firmly connected to the detection arm, wherein the outer arm is led out of the fuel chamber of the heater, and a weight is attached on the outer arm. The detection deflection element is associated with a pressing element which consists of a cam associated with the outer arm and connected to a loading door by means of a rod. This pressing element, when the door of the fuel chamber is opened, when the new fuel is loaded, exceeds the torque of the detection deflection element and rotates the detection arm toward the fuel chamber wall. Adding of this pressing element is particularly preferable when loading fuel because the detection arm is deflected into the fuel chamber, which can lead to the fuel during loading being wedged between the rod and the fuel chamber wall. The detection arm can thus create an obstacle preventing filling of the fuel chamber with fuel, which may also endanger the detection of the residual layer. The pressing element thus increases the reliability of operation and comfort of the heater operator, who would otherwise have to press the detection arm against the sidewall of the fuel chamber, e.g. by using the first piece of loaded fuel.

In terms of heater control, it is preferable to connect the outer arm to a position sensor or an air flap.

The advantage of the invention is the accurate and reliable detection of the optimum size of the residual layer based on its volume in a simple and inexpensive method which minimally limits the construction of the heater.

### Summary of figures in drawings

FIG. 1 Schematic view of the fuel chamber of the heater in a state where the heater is full of fuel
FIG. 2 Schematic view of the fuel chamber of the heater in a state where there is a residual fuel layer in the heater
FIG. 3 Schematic view of the fuel chamber of the heater with a detection deflection element in the shape of an outer arm with a weight and a position sensor in a state where the heater is full of fuel
FIG. 4 Schematic view of the fuel chamber of the heater of FIG. 3, in a state where there is a residual fuel layer in the heater
FIG. 5 Schematic view of the fuel chamber of the heater with a detection deflection element in the shape of an outer arm with a weight and an air flap in a state where the heater is full of fuel
FIG. 6 Schematic view of the fuel chamber of the heater of FIG. 5 in a state where there is a residual fuel layer in the heater
FIG. 7 Schematic view of the embodiment of the heater of FIGS. 2, 3, with added pressing element with a rod, wherein the embodiment is shown in a position where the loading door is open
FIG. 8 Schematic view of the embodiment of the heater of FIGS. 2, 3, with added pressing element with a rod, wherein the embodiment is shown in a position where the loading door is closed

### Description of embodiments

Based on the exemplary embodiment depicted in Figs. 1 and 2, the device for detection of the optimum residual layer in the fuel chamber 1 (i.e. in the chamber intended for combustion or gasification of fuel 2, based on the rotating detection arm 7) is made of refractory steel, e.g. a rectangular profile of dimensions, e.g. 3 x 20 mm, whose longer wall is parallel to the sidewall 3 of the fuel chamber 1. The detection arm 7 passes through an opening which is approximately in the middle of the sidewall 3 of the fuel chamber 1. In this opening, there is also a fulcrum 5 of the detection arm 7 realized by the shaft with the detection arm 7 firmly connected, wherein the shaft is mounted in a pair of bushings firmly connected to the sidewall 3. The detection arm 7, in the state where fuel 2 is in the heater 20, is in close proximity to the sidewall 3 and is oriented vertically downwards (i.e. the end portion 7.1 of the detection arm 7 is located close to the sidewall 3). The end portion 7.1 of the detection arm 7 is located at a height level corresponding to the level of the residual layer 8 of fuel 2. The detection arm 7 is in contact with the detection deflection element 4.

The exemplary embodiment of Figs. 3 and 4 shows a specific example of design of the detection deflection element 4. The detection deflection element 4 is formed by an outer arm 10 which is firmly connected to the detection arm 7 at a fulcrum 5. A weight 11 is attached to the end of the outer arm 10. The outer arm 10 is located outside the fuel chamber 1 of the heater 20. The outer arm 10 is connected to a position sensor 6 which is connected to a control unit of the heater 20 (not shown).

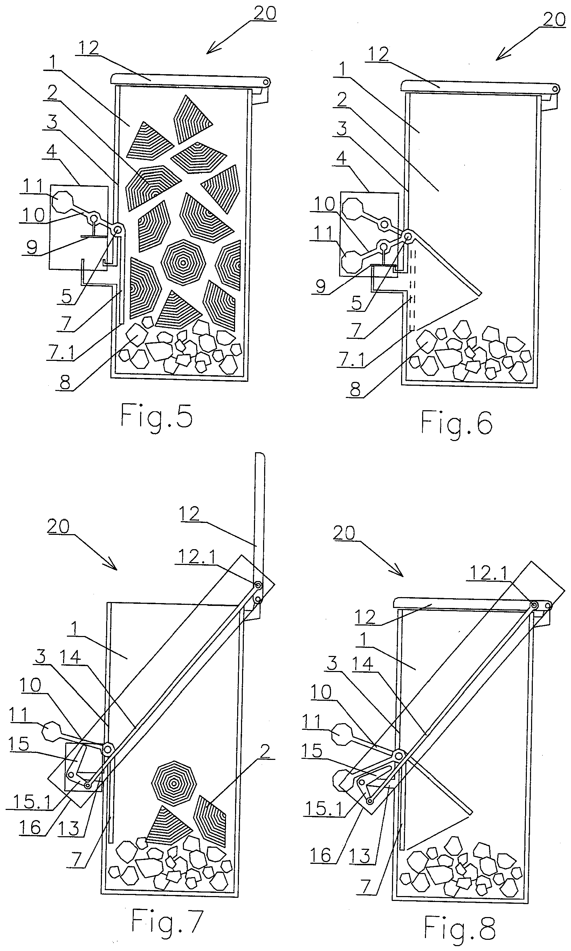

The exemplary embodiment of Fig. 5 shows another specific example of design of the detection deflection element 4, which in this case is formed by an outer arm 10 directly connected to an air flap 9 on the combustion air inlet into the fuel chamber 1.

The exemplary embodiment of Figs. 7 and 8 shows the heater design of Figs. 2 and 3, supplemented by a pressing element 16 included in the invention.

This pressing element 16 consists of a cam 15 pivotally mounted on a jib 13 which is located under the outer arm 10. The cam 15 is firmly connected to the control arm 15.1, where at its free end the lower end of the rod 14 is pivotally mounted. The upper end of the rod 14 is pivotally mounted to the eccentric 12.1 of the loading door 12.

Other variants are also possible, wherein the detection deflection element 4 can be implemented in a variety of ways. The deflection function can be provided by a spring, a motor or other element acting on the detection arm 7 via torque. The detection function can be provided, e. g. by means of an optical, inductive or other element, which allows detecting the deflection of the detection arm 7 towards the fuel chamber 1 of the heater 20. The fulcrum 5 may be located near other than the sidewall 3, e.g. near the upper wall (ceiling) of the fuel chamber 1. The detection arm 7 may have different profiles, shapes, angles of rotation, etc. The pressing element 16 may, in addition to the loading door 12, be connected, e.g. with the fuel feeder, short-circuit flue gas flap or with another part of the heater 20. Likewise, the mechanism of the pressing element 16 can be implemented in a variety of ways, instead of the cam 15, it is possible to use a rod, cable or other element to ensure that the detection arm 7 is pressed against the sidewall before loading.

The function of the device in Fig. 1, 2 is as follows: The detection deflection element 4 is permanently acting on detection arm 7 by means of a torque, the effect of which, in the state of no fuel in the boiler (Fig. 2), is that the detection arm 7 is leaning into the fuel chamber 1. After loading fuel 2 (Fig. 1) into the heater 20, however, the torque of the detection deflection element 4 is overcome by the pressure of fuel 2. This fuel 2 pushes the detection arm 7 against the sidewall 3 of the fuel chamber 1 of the heater 20. As the fuel 2 keeps burning, its level drops in fuel chamber 1. As a result, the detection arm 7 starts to be exposed from above. When the detection arm 7 is fully exposed and ceases to be pressed by the fuel 2, it will cause the detection arm 7 to rotate in the direction from the sidewall 3 into the fuel chamber 1 as a result of torque of the detection deflection element 4. By this rotation (approximately 45° in the present example) the residual layer 8 of fuel 2 is detected.

In the specific example of Figs. 3 and 4, the method of detection of fuel burnout in the fuel chamber 1 is the same as that described in Figs. 1 and 2, wherein the rotation of the detection arm 7 after burnout of fuel 2 is caused by the torque applied by the outer arm 10 with the weight 11 acting on the detection arm 7. By this rotation, the outer arm 10 simultaneously activates the position sensor 6. The position sensor 6 provides a signal to the controller (not shown) of the heater 20 which closes the combustion air supply to the heater 20. Closing of the combustion air supply may be either complete or substantial (a small amount of air will continue to flow into the heater 20 to ensure that the residual layer does not go out). Closing of the air supply can be either immediate or with a time delay (the size of the residual layer 8 is controlled by the length of the time delay).

In another specific example in Figs. 5 and 6, the method of detection of fuel burnout in the fuel chamber 1 is the same as that described for embodiment in Figs. 3 and 4, wherein rotation of the outer arm 10 results directly in closing the combustion air supply to the heater 20 by the air flap 9.

In the inventive embodiment in Figs. 7 and 8, the method of detection of fuel burnout in the fuel chamber 1 is the same as that described in Figs. 1 to 6, wherein the said pressing element 16 works so that by opening the loading door 12 (Fig. 7) the eccentric 12.1 is rotated clockwise, which moves the rod 14 in an obliquely upward direction. The rod 14, by means of the control arm 15.1, rotates the cam 15 counter clockwise, whereby the cam 15 lifts the outer arm 10. As a result, the detection arm 7 is pressed against the sidewall 3 of the fuel chamber 1 of the heater 20, and thus does not prevent the fuel 2 from being loaded. By closing the loading door 12 (Fig. 8), the pressing element 16 is set to a position where the movement of the outer arm 10 and thereby also of the detection arm 7 is not limited.

### List of reference signs

- 1: Fuel chamber
- 2: Fuel
- 3.: Sidewall
- 4.: Detection deflection element
- 5.: Fulcrum
- 6.: Position sensor
- 7.: Detection arm
- 7.1: End portion of the detection arm
- 8: Residual layer
- 9.: Air flap
- 10: Outer arm
- 11: Weight
- 12: Loading door
- 12.1: Eccentric of loading door
- 13: Jib
- 14: Rod
- 15: Cam
- 15.1: Control arm of cam
- 16: Pressing element
- 20: Heater

## Claims

1. A solid fuel heater (20) comprising a device for detection of the optimum residual layer (8) of fuel (2), the device comprising a detection arm (7) pivotally located in a fuel chamber (1) of the heater (20), wherein the end portion (7.1) of the detection arm (7) defines the level of the residual layer (8) of fuel (2), and wherein the detection arm (7) is connected to a detection deflection element (4), the detection deflection element (4) comprises an outer arm (10) which is firmly connected to the detection arm (7), wherein the outer arm (10) is led out of the fuel chamber (1), wherein on the outer arm (10) a weight (11) is attached, wherein the detection deflection element (4) is associated with a pressing element (16), **characterized in that** the pressing element (16) consists of a cam (15) associated with the outer arm (10), wherein the cam (15) is connected to a loading door (12) by means of a rod (14).

2. A device according to claim 1, **characterized in that** the outer arm (10) is connected to a position sensor (6).

3. A device according to claim 1, **characterized in that** the outer arm (10) is connected to an air flap (9).

## Patentansprüche

1. Festbrennstoffheizer (20) umfasst eine Vorrichtung zur Ermittlung der optimalen Restbrennstoffschicht (8) des Brennstoffes (2), diese Vorrichtung umfasst einen Detektionsschulter (7), der umdrehbar in einem Brennstoffraum (1) einer Heizers (20) angeordnet ist, wobei der Endteil (7.1) des Detektionsschulters (7) einen Spiegel des Restbrennsroffes (8) des Brennstoffes (2) abgrenzt, wobei der Detektionsschulter (7) mit einem detektionsherausbiegenden Element (4) durchgeschaltet ist, wobei der detektionsherausbiegenden Element (4) einen Aussenschulter (10) umfasst, der fest mit dem Detektionsschulter (7) verbunden ist, wobei der Aussenschulter (10) aussen des Brennstoffraumes (1) hinausgeführt ist, wobei auf dem Aussenschulter (10) ein Senkgewicht (11) befestigt ist, wobei zu dem detektionsherausbiegenden Element (4) ein zudrückender Element (16) angeordnet ist, **dadurch gekennzeichnet, dass** der zudrückende Element (16) aus einer einer Nocke (15) die dem Aussenschulter (10) zugeordnet ist, besteht, wobei die Nocke (15) mit dem Zufuhrtürchen (12) mittels einer Ziehstange (14) verbunden ist.

2. Festbrennstoffheizer nach dem Anspruch 1, **dadurch gekennzeichnet, dass** der Aussenschulter (10) mit einem Sensor (6) der Lage durchgeschaltet ist,

3. Festbrennstoffheizer nach dem Anspruch 1, **dadurch gekennzeichnet, dass** der Aussenschulter (10) mit einem Sensor (6) der Luftklappe (9) verbunden ist.

## Revendications

1. Dispositif de chauffage (20) comprend un dispositif de détection de couche de combustible résiduelle optimale pour appareils de chauffage a combustible solide (8), de carburant le dispositif comprenant un bras de détection (7) disposé de manière rotative dans la chambre à combustible (1) de ce dispositif de chauffage (20), la partie terminale (7.1) du bras de détection (7) délimite le niveau résiduel (8) du carburant (8), et dans lequel le bras de détection (7) est connecté à un élément de déviation de détection (4), dans lequel cet élément de déviation de détection (4) comprend un bras extérieur (10) qui est relié de manière rigide au bras de détection (7), dans lequel le bras extérieur (10) est conduit à l'extérieur de la chambre à combustible (1) et un poids (11) est fixé au bras extérieur (10), dans lequel un élément de déviation de détection (4) est associé à un élément de pression (16), **caractérisé en ce que** cet élément de pression (16) comprend une came (15) associée au bras extérieur (10), la came (15) étant reliée à une porte d'alimentation (12) par une tige de poussée (14).

2. Dispositif selon la revendication 1, **caractérisé en ce que** le bras extérieur (10) est relié à un capteur de position (6).

3. Dispositif selon la revendication 1, **caractérisé en ce que** le bras extérieur (10) e st relié à un clapet d'air (9).
